# EUROPÄISCHE PATENTSCHRIFT

(11) **EP 0 560 803 B1**
(45) Veröffentlichungstag und Bekanntmachung des Hinweises auf die Patenterteilung: **27.04.1994**
(21) Anmeldenummer: 91920222.6
(22) Anmeldetag: 22.11.1991
(51) Int. Cl.: F02B 77/08, G01M 13/00

(54) **ERMITTLUNG EINER REAKTIONSZONE IN EINEM KATALYSATOR**
DETERMINATION OF THE LOCATION OF THE REACTION ZONE IN A CATALYTIC CONVERTER
DETERMINATION D'UNE ZONE REACTIONNELLE DANS UN CATALYSEUR

(30) Priorität: 05.12.1990 DE 4038829
(43) Veröffentlichungstag der Anmeldung: 22.09.1993
(73) Patentinhaber: Emitec Gesellschaft für Emissionstechnologie mbH, 53797 Lohmar (DE)
(72) Erfinder: SWARS, Helmut, D-5060 Bergisch Gladbach 1 (DE); BRÜCK, Rolf, D-5063 Overath (DE); MAUS, Wolfgang, W-5060 Bergisch-Gladbach 1 (DE)
(74) Vertreter: Kahlhöfer, Hermann, Dipl.-Phys.
(86) Internationale Anmeldenummer: EP9102206
(87) Internationale Veröffentlichungsnummer: WO9210653

(56) Entgegenhaltungen:
- EP-A- 0 236 659
- DE-A- 2 643 739
- Patent Abstracts of Japan, vol. 004, no. 163 (P-036) 13 November 1980 & JP-A-55 110 941 (SHOWA) 27 August 1980
- Patent Abstracts of Japan, vol. 011, no. 002 (P-532) 6 January 1987 & JP-A-61 181 921 (MITSUBISHI) 14 August 1986

## Beschreibung

Die Erfindung betrifft die Ermittlung einer Reaktionszone in einem Katalysator, der von einem Fluid durchströmbar ist, das Bestandteile enthält, die durch eine katalysierte, exotherme Reaktion umsetzbar sind.

Als "Katalysator" wird hierbei ein wabenähnlicher Körper aus Metall oder Keramik verstanden, der einen Innenbereich mit einer Vielzahl von Kanälen aufweist, die von Abgasen oder anderen Fluiden mit umsetzbaren Bestandteilen durchströmbar sind. Jeder Kanal weist dabei eine Wand auf, die mit einer Beschichtung aus katalytisch aktivem Material, dem Katalysator im eigentlichen Sinne, bedeckt ist. Derartige Katalysatoren finden vielfältige Anwendung, insbesondere in den Abgassystemen der Brennkraftmaschinen von Kraftfahrzeugen zur Umsetzung der in den Abgasen enthaltenen Schadstoffe in unschädliche Verbindungen. Metallische Katalysatoren werden im allgemeinen aus strukturierten Blechen geschichtet, spiralig aufgewickelt oder auf andere Weise verschlungen. Möglichkeiten hierzu sind in den Patentschriften EP 0 223 058 B2, EP 0 245 737 B2 und EP 0 245 738 B2 beschrieben.

Es ist auch bereits bekannt, zur Überwachung der Funktion eines Katalysators im Abgassystem einer Brennkraftmaschine an oder in dem Katalysator Temperaturmeßfühler vorzusehen, aus deren Meßwerten Rückschlüsse auf die Funktion beim Betrieb der Brennkraftmaschine gezogen werden können. Diesbezügliche Hinweise sind der DE 26 43 739 Al, der DE 37 10 268 Al und der EP 0 236 659 Al zu entnehmen. Gemäß den beiden erstgenannten Schriften soll ein Katalysator mit zumindest zwei voneinander beabstandeten Temperaturfühlern ausgestattet werden; diese können beide außerhalb des Katalysators, d. h. ein erster Fühler vor der Anströmseite des Katalysators und ein zweiter Fühler hinter der Abströmseite des Katalysators, oder auch im Inneren des Katalysators, angeordnet sein. Weiterhin wird aus den Meßsignalen zweier Fühler ein Signal gebildet, das der Differenz der von den Meßfühlern ermittelten Temperaturen entspricht, und dieses Signal herangezogen zu Bewertung der Funktion des Katalysators. Ein entsprechendes Auswertesystem zu diesem Zweck wird in der letztgenannten Schrift beschrieben; dieses Auswertesystem veranlaßt ein Warnsignal, falls die Temperaturdifferenz einen gewissen ersten Grenzwert überschreitet, und ein einen dauerhaften Schaden angebendes Signal, falls die Temperaturdifferenz einen deutlich über dem ersten Grenzwert liegenden zweiten Grenzwert übertrifft.

Konkrete Aussagen über die im Inneren eines Katalysators herrschenden thermodynamischen Verhältnisse sind mit den Vorschlägen des Standes der Technik nicht möglich; insbesondere kann mit den bekannten Systemen der Zustand eines insgesamt noch ausreichend funktionierenden Katalysators nicht beurteilt werden. Dies ist aber notwendig zur Gewinnung von Aussagen über den Abnutzungsgrad eines Katalysators im Hinblick auf die während des Betriebs auftretenden Alterungs-und/oder Vergiftungsvorgänge.

Dementsprechend sollen mit der vorliegenden Erfindung Verfahren angegeben werden, die einfach und schnell eine Funktionsüberprüfung eines Katalysators, insbesondere im Hinblick auf Alterungs- und/oder Vergiftungserscheinungen, ermöglichen; die Verfahren sollen während des regulären Betriebs des Katalysators oder im Rahmen kurzer Betriebsunterbrechungen anwendbar sein. Im speziellen Fall der Funktionsüberprüfung von Katalysatoren in den Abgassystemen von Kraftfahrzeugen sollen sie eine Überprüfung im Rahmen der beispielsweise in der Bundesrepublik Deutschland üblichen Kraftfahrzeug-Reihenuntersuchung gestatten.

Gemäß vorliegender Erfindung ist zur Funktionsüberprüfung eines Katalysators festzustellen, in welchem Bereich im Inneren des Katalysators die katalysierte Reaktion zur Umsetzung der reagiblen Bestandteile des den Katalysator durchströmenden Fluides hauptsächlich stattfindet; im besonderen wird ein Verfahren zur Ermittlung einer Reaktionszone in einem Katalysator angegeben, wobei
a) der Katalysator einen Innenbereich aufweist, der von einer etwa parallel zu einer Strömungsrichtung liegenden Mantelfläche umgeben ist;
b) der Innenbereich entlang der Strömungsrichtung von einem Fluid durchströmbar ist, das Bestandteile enthält, die im Innenbereich durch eine katalysierte, exotherme Reaktion umsetzbar sind;
c) die Reaktionszone gegeben ist als Teil des Innenbereiches, in dem die Reaktion überwiegend stattfindet;
d) die Reaktionszone ermittelt wird durch Messung der Verteilung der Temperatur auf der Mantelfläche entlang einer Meßstrecke, die etwa parallel zur Strömungsrichtung ausgerichtet ist, wobei die Reaktionszone bestimmt ist durch einen Abschnitt der Meßstrecke, auf dem die Temperatur um weniger als ein vorgegebener Grenzwert von dem Maximalwert der Temperatur auf der Meßstrecke abweicht.

Die Erfindung macht sich die Tatsache zunutze, daß stets die katalytische Aktivität eines Katalysators, worunter die mit dem Katalysator maximal erzielbare Umsetzungsrate der katalysierten Reaktion zu verstehen ist, für eine gegebene Anwendung mit erheblichem Überschuß bemessen wird; damit soll ein während des Betriebs stets auftretender Aktivitätsverlust durch Alterung und/oder Vergiftung ausgeglichen und eine hohe betriebliche Nutzungsdauer des Katalysators erzielt werden. Aufgrund der hohen katalytischen Aktivität findet die katalysierte Reaktion nicht gleichmäßig über den gesamten Katalysator statt. Sie ist auf eine relativ eng begrenzte Zone des Katalysators, die im folgenden "Reaktionszone" genannt wird und in einem neuen Katalysator kaum mehr als 20 % des insgesamt zur Verfügung stehenden Volumens ausmacht, beschränkt. Dabei ist die Form der Reaktionszone u. a. auch bestimmt durch das Strömungsprofil des den Katalysator durchströmenden Fluides; da üblicherweise die Strömungsgeschwindigkeit des Fluides in der Mitte des Katalysators am größten ist und zu den Randbereichen hin abnimmt, ist die Reaktionszone im Inneren des Katalysators nicht eben, sondern etwa kegelförmig. Im Bereich der Mantelfläche ist die Reaktionszone wahrnehmbar durch die Wärmestrahlung, die von ihr ausgeht; im Innenbereich des Katalysators sinkt die Temperatur des Fluides hinter der Reaktionszone nicht wesentlich ab, im Bereich der Mantelfläche wird jedoch ein nennenswertes Absinken der Temperatur hinter der Reaktionszone aufgrund der von der Mantelfläche ausgehenden Wärmestrahlung beobachtet.

Dementsprechend kann die Reaktionszone nachgewiesen werden durch Bestimmung des Bereiches auf der Mantelfläche, in dem die Temperatur um weniger als ein vorgegebener Grenzwert von dem Maximalwert der Temperatur auf der Mantelfläche abweicht. Dies erfolgt zweckmäßigerweise dadurch, daß auf der Mantelfläche eine günstigerweise etwa parallel zur Strömungsrichtung ausgerichtete Meßstrecke festgelegt wird und entlang dieser Meßstrecke die Temperaturmessung erfolgt.

Da die Temperatur der Mantelfläche in der Umgebung der Reaktionszone gegenüber der Temperatur der Mantelfläche abseits der Reaktionszone deutlich überhöht ist, ist die Bestimmung des zur Anwendung der Erfindung vorzugebenden Grenzwertes in der Regel nicht kritisch. In Versuchsreihen wurde an metallischen Katalysatoren festgestellt, daß die Temperatur der Mantelfläche in der Umgebung der Reaktionszone um Werte bis zu 80 K überhöht war; dementsprechend kann der Grenzwert bis zu etwa 50 K, vorzugsweise bis zu etwa 30 K, betragen. Die Erfindung erfordert insbesondere keine besonders präzise Festlegung des Grenzwertes; eine Definition des Grenzwertes beispielsweise als Differenz der Maximaltemperatur auf der Mantelfläche des zu überwachenden Katalysators und einer Temperatur, bei der ein Farbstoff reversibel oder irreversibel seine Farbe wechselt, ist im Regelfall ausreichend. Auch wird eine erfindungsgemäße Ermittlung einer Reaktionszone in einem Katalysator unter Benutzung elektrischer Temperaturfühler nicht wesentlich beeinträchtigt, wenn Temperaturfühler und diesen zugeordnete Auswerteeinrichtungen verwendet werden, die nur Messungen mit relativ großen Toleranzen, beispielsweise im Bereich von 10 %, erlauben.

Die Erfindung gestattet die Ermittlung der Reaktionszone während des Betriebs des Katalysators; hierzu ist beispielsweise die Mantelfläche mit Temperaturmeßfühlern oder dergleich zu versehen. Günstig ist es in einem solchen Falle, das Verfahren auf solche Betriebszustände zu beschränken, bei denen das Fluid den Innenbereich des Katalysators in einer stationären Strömung durchströmt. Instationäre Strömungen treten insbesondere in den Abgassystemen von Kraftfahrzeugen bei jedem Lastwechsel auf; diese sind, da stets verbunden mit Änderungen der chemischen Zusammensetzung, der Temperatur und der Strömungsgeschwindigkeit des Abgases, in ihrer Wechselwirkung mit dem Katalysator nur schwer beschreibbar; da der Katalysator aufgrund seiner Wärmekapazität insbesondere einer Temperaturänderung nur in Zeitskalen der Größenordnung etwa 1 sec. folgen kann, können instationäre Betriebszustände u. U. nur eingeschränkt interpretierbare Meßergebnisse liefern.

Die Erfindung gestattet aufgrund ihrer Einfachheit auch, die Reaktionszone unmittelbar nach einer Durchströmung des Innenbereichs mit dem Fluid zu bestimmen. Dies ist besonders wichtig z. B. zur Untersuchung von Kraftfahrzeug-Katalysatoren im Rahmen der in einigen Ländern üblichen Reihenuntersuchung; die Überprüfung des Katalysators kann unmittelbar nach einer kurzen Außerbetriebsetzung des Kraftfahrzeuges erfolgen.

In vorteilhafter Weiterbildung der Erfindung erfolgt die zur Ermittlung der Reaktionszone notwendige Temperaturmessung durch Auswertung der von der Mantelfläche ausgehenden Wärmestrahlung. Dies hat den Vorzug, daß die zur Messung notwendige Meßeinrichtung nicht fest mit dem Katalysator verbunden werden muß, was besonders bei mobilen Katalysatoren Vorteile bringen kann. Besonders einfach wird die Messung ausgeführt, indem von einem die Meßstrecke enthaltenden Ausschnitt der Mantelfläche des Katalysators eine fotografische Infrarot-Aufnahme gemacht wird. Hierzu können sofortentwickelnde Filme eingesetzt werden, so daß nach kürzester Frist ein Temperaturprofil der Meßstrecke zur Verfügung steht. Eine besonders anschauliche Darstellung wird dann erhalten, wenn die Aufzeichnung in Farbe erfolgt, wobei unterschiedliche Farben unterschiedliche Temperaturen anzeigen. Die Filmaufnahme kann selbstverständlich durch eine Video-Aufnahme oder dergleichen ersetzt werden; damit ist auch in Verbindung mit bekannten elektronischen Bildverarbeitungseinrichtungen eine unmittelbare maschinelle Auswertung der Temperaturmessung möglich.

Eine weitere einfache Möglichkeit zur Durchführung der Temperaturmessung ist die Überdeckung der Meßstrecke mit einem Substrat, das eine durch Wärmeeinwirkung veränderbare Farbe aufweist. Ein solches Substrat kann beispielsweise ein beschichteter Papierstreifen oder eine Beschichtung auf der Mantelfläche selbst sein. Die Reaktionszone wird, wie im Falle der Infrarot-Aufnahme, ermittelt durch Auswertung der Farbe des Substrats.

In weiterer Ausbildung der Erfindung kann die Temperaturmessung auch mit zumindest einem auf der Meßstrecke befindlichen und über diese beweglichen Temperaturmeßfühler durchgeführt werden; auch kann die Meßstrecke mit einer Mehrzahl von Temperaturmeßfühlern ausgestattet werden. Diese Ausbildung der Erfindung ist zwar apparativ aufwendiger, sie erlaubt jedoch die permanente Betriebsüberwachung des Katalysators.

Im Rahmen jedweder Ausbildung der Erfindung kann die Ermittlung der Reaktionzone in der Weise vereinfacht werden, daß die im konkreten Fall gemessene Verteilung der Temperatur mit einer Vielzahl vorgegebener Standardverteilungen verglichen wird, die im Rahmen von Eichmessungen für den jeweiligen Typ des Katalysators ermittelt wurden und für deren jede die Lage der Reaktionszone bekannt ist. Standardverteilungen können auch durch Simulationsrechnungen gewonnen werden. Die Lage der Reaktionszone kann anhand von Standardverteilungen durch Interpolation ermittelt werden; zur Erzielung einer vorgegebenen Genauigkeit ist eine hinreichende Anzahl verschiedener Standardverteilungen erforderlich.

Besondere Anwendung findet das erfindungsgemäße Verfahren jedweder Ausgestaltung in erster Linie zur Bestimmung des Abnutzungsgrades eines Katalysators, wobei die Lage der Reaktionszone bezüglich der Meßstrecke als Maß für den Abnutzungsgrad herangezogen wird. Ist der Katalysator neu, so findet die katalysierte Reaktion in erster Linie in unmittelbarer Nähe der Anströmseite statt, an der das Fluid in den Katalysator eintritt; mit zunehmender Alterung verschiebt sich die Reaktionszone von der Anströmseite zur Abströmseite, wo das Fluid den Katalysator wieder verläßt. Auf diese Weise kann eine besonders einfache Funktionüberprüfung realisiert werden.

Ein besonderes Einsatzgebiet der Erfindung ist, wie bereits näher ausgeführt, die Funktionsüberprüfung von Katalysatoren in den Abgassystemen von Kraftfahrzeugen. Im Rahmen üblicher Tests für die Qualifizierung von Katalysator-Baumustern, insbesondere im Rahmen des in den Vereinigten Staaten von Amerika gesetzlich vorgesehenen Tests zur Simulation des gewöhnlichen Fahrzeugbetriebs, stellen sich auf den Mantelflächen der Katalysatoren Temperaturen zwischen etwa 300° C und 400° C ein. Die Lage der Reaktionszone im Innenbereich eines Katalysators tritt dabei durch ein Temperaturmaximum auf der Mantelfläche deutlich hervor; die Temperatur der Mantelfläche in der Umgebung der Reaktionszone ist üblicherweise gegenüber der Temperatur der Mantelfläche abseits der Reaktionszone um etwa 60 K bis etwa 80 K überhöht. Ein solcherart ausgeprägtes Maximum ist leicht feststellbar und bietet, da sich seine Lage mit zunehmender Abnutzung des Katalysators in beschriebener Weise verschiebt, ein einfaches und sicheres Mittel zur Funktionsprüfung und/oder Funktionsüberwachung eines Katalysators im Abgassystem eines Kraftfahrzeuges.

Die weitere Erläuterung der Erfindung erfolgt anhand der in der Zeichnung dargestellten, bevorzugten Ausführungsbeispiele. Im einzelnen zeigen:
Figur 1 einen zur erfindungsgemäßen Ermittlung der Reaktionszone ertüchtigten Katalysator;
Figur 2 einen Querschnitt durch einen Katalysator;
Figur 3 die Temperaturverteilung auf der Mantelfläche eines Katalysators.

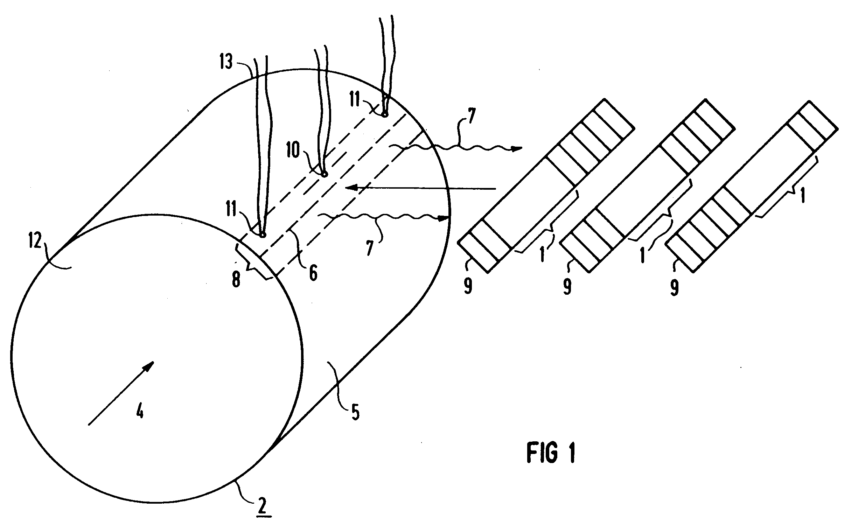

Figur 1 zeigt einen Katalysator 2, der entlang einer Strömungsrichtung 4 von einem katalytisch umsetzbare Anteile enthaltenden Fluid, insbesondere dem Abgas eines Verbrennungsmotors, durchströmbar ist. Das Fluid tritt an einer Anströmseite 12 in den Katalysator 2 ein und verläßt den Katalysator 2 an einer Abströmseite 13. Im vorliegenden Fall ist der Katalysator 2 zylindrisch; denkbar sind auch andere Formen, wie sie beispielsweise im zitierten Stand der Technik beschrieben sind. Zwischen Anströmseite 12 und Abströmseite 13 ist der Katalysator 2 begrenzt durch eine Mantelfläche 5, im vorliegenden Fall den Zylindermantel, auf der eine Meßstrecke 6 zur erfindungsgemäßen Bestimmung der Verteilung der Temperatur auf der Mantelfläche 5 ausgewiesen ist. Die Messung der Temperaturverteilung kann beispielsweise mit Temperaturmeßfühlern 10, 11 erfolgen, wobei gleichermaßen bewegliche Temperaturmeßfühler 10 und ortsfeste Temperaturmeßfühler 11 einsetzbar sind. Weiterhin kann zur Temperaturmessung die von einem die Meßstrecke 6 enthaltenen Ausschnitt 8 der Mantelfläche 5 ausgehende Wärmestrahlung 7 analysiert werden; dies kann beispielsweise durch Anfertigung einer Infrarot-Fotoaufnahme des Ausschnittes 8 erfolgen. Ein wirkungsgleiches Mittel ist das Aufbringen eines Substrates 9 mit einer unter Wärmeeinfluß reversibel oder irreversibel veränderlichen Farbe auf den Ausschnitt 8. Anhand der eingetretenen Farbveränderung kann auf dem Substrat 9 die Lage der Reaktionszone 1 ermittelt werden. In Figur 1 sind beispielhaft dargestellt drei Substrate 9, wobei die eingezeichneten Querstriche Farbgrenzen darstellen sollen; die Lage der Reaktionszone 1 ist jeweils angedeutet.

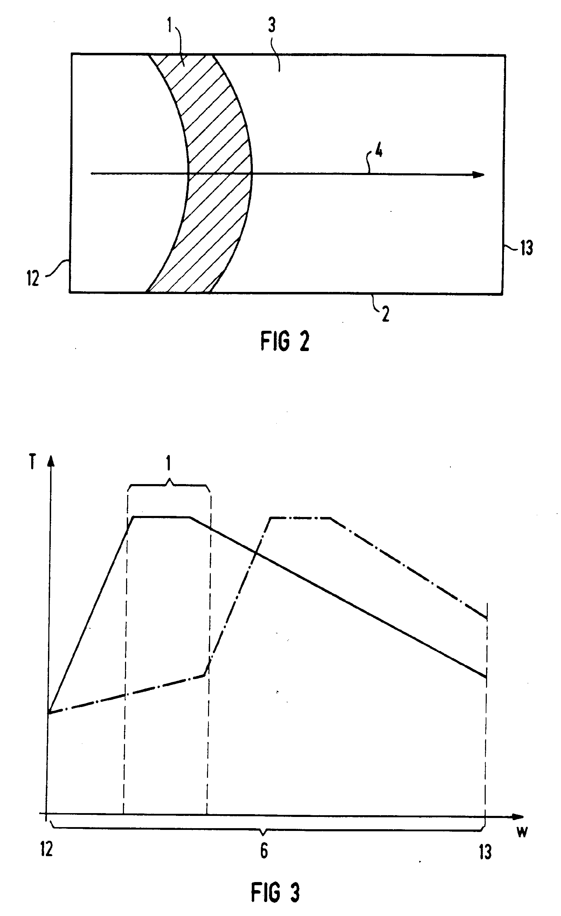

Figur 2 verdeutlicht die Lage der Reaktionszone 1 im Innenbereich 3 eines Katalysators 2. Die Reaktionszone 1 ist aufgrund des entlang der Strömungsrichtung 4 von der Anströmseite 12 zur Abströmseite 13 fließenden Fluides nicht eben, sondern gekrümmt; die Krümmung ist dabei im wesentlichen bestimmt durch die Verteilung der Strömungsgeschwindigkeit des Fluides, die am Rand des Innenbereiches 3 stets kleiner ist als im Bereich seiner Mitte.

In Figur 3 ist die Temperaturverteilung auf der Meßstrecke 6 von der Anströmseite 12 zur Abströmseite 13 angedeutet. Auf der Abszisse des Diagramms ist der über die Meßstrecke 6 verlaufende Weg w dargestellt, auf der Ordinate die Temperatur T. Im Bereich der Anströmseite 12 entspricht die Temperatur auf der Meßstrecke 6 im wesentlichen der Temperatur des einströmenden Fluides; hinter der Anströmseite 12 steigt die Temperatur auf der Meßstrecke 6 aufgrund der einsetzenden katalysierten Reaktion an bis zum Erreichen eines Maximums und fällt schließlich zur Abströmseite 13 hin wieder ab. Das Maximum der Temperatur zeigt die Lage der Reaktionszone 1 im Innenbereich des Katalysators an, da in der Reaktionszone 1 die Wärmeerzeugung maximal ist. Hinter der Reaktionszone 1 findet praktisch keine Wärmeerzeugung mehr statt, und aufgrund der Wärmeabstrahlung von der Mantelfläche sinkt die auf der Meßstrecke zu messende Temperatur wieder ab. Die Lage des Maximums der Temperaturverteilung auf der Meßstrecke 6 kann als Indikator für die Lage der Reaktionszone 1 im Inneren des Katalysators herangezogen werden: Ist der Katalysator relativ neu, so findet sich das Maximum der Temperaturverteilung in der Nähe der Anströmseite 12 - dies ist angedeutet durch die ausgezogene Kurve in Figur 3; mit zunehmender Alterung und/oder Vergiftung des Katalysators wandert die Lage des Maximums von der Anströmseite 12 zur Abströmseite 13, da der Katalysator in der Nähe der Anströmseite 12 seine Aktivität weitgehend verloren hat - siehe hierzu die strichpunktierte Kurve in Figur 3.

Die Erfindung bietet eine einfach, schnell und sicher auszuführende Möglichkeit zur Gewinnung einer Aussage über die Funktionsfähigkeit eines Katalysators.

## Patentansprüche

1. Verfahren zur Ermittlung einer Reaktionszone (1) in einem Katalysator (2), wobei
a) der Katalysator (2) einen Innenbereich (3) aufweist, der von einer etwa parallel zu einer Strömungsrichtung (4) liegenden Mantelfläche (5) umgeben ist;
b) der Innenbereich (3) entlang der Strömungsrichtung (4) von einem Fluid durchströmbar ist, das Bestandteile enthält, die im Innenbereich (3) durch eine katalysierte, exotherme Reaktion umsetzbar sind;
c) die Reaktionszone (1) gegeben ist als Teil des Innenbereiches (3), in dem die Reaktion überwiegend stattfindet; dadurch gekennzeichnet, daß die Reaktionszone (1) ermittelt wird durch Messung der Verteilung der Temperatur auf der Mantelfläche (5) entlang einer Meßstrecke (6), die etwa parallel zur Strömungsrichtung (4) ausgerichtet ist, wobei die Reaktionszone (1) bestimmt ist durch einen Abschnitt der Meßstrecke (6), auf dem die Temperatur um weniger als ein vorgegebener Grenzwert von dem Maximalwert der Temperatur auf der Meßstrecke (6) abweicht.

2. Verfahren nach Anspruch 1, wobei die Reaktionszone (1) ermittelt wird, während der Innenbereich (3) von dem Fluid durchströmt wird.

3. Verfahren nach Anspruch 2, wobei das Fluid den Innenbereich (3) in einer stationären Strömung durchströmt.

4. Verfahren nach Anspruch 1, wobei die Reaktionszone (1) unmittelbar nach einer Durchströmung des Innenbereichs (3) mit dem Fluid bestimmt wird.

5. Verfahren nach einem der vorhergehenden Ansprüche, wobei die Messung durch Auswertung der von der Mantelfläche (5) ausgehenden Wärmestrahlung (7) erfolgt.

6. Verfahren nach Anspruch 5, wobei mit der Wärmestrahlung (7), die von einem die Meßstrecke (6) enthaltenden Ausschnitt (8) der Mantelfläche (5) ausgeht, eine fotografische Aufzeichnung des Ausschnitts (8) erfolgt.

7. Verfahren nach einem der Ansprüche 1 bis 4, wobei
a) die Meßstrecke (6) mit einem Substrat (9) überdeckt wird, das eine durch Wärmeeinwirkung veränderbare Farbe aufweist;
b) die Reaktionszone (1) ermittelt wird durch Auswertung der Farbe des Substrats (9).

8. Verfahren nach einem der Ansprüche 1 bis 4, wobei die Messung mit zumindest einem auf der Meßstrecke (6) befindlichen und über diese beweglichen Temperaturmeßfühler (10) erfolgt.

9. Verfahren nach einem der Ansprüche 1 bis 4, wobei die Messung mit einer Mehrzahl von Temperaturmeßfühlern (10, 11, 12) erfolgt, die auf der Meßstrecke (6) angeordnet sind.

10. Verfahren nach einem der vorhergehenden Ansprüche, wobei
a) die gemessene Verteilung der Temperatur mit einer Vielzahl vorgegebener Standardverteilungen verglichen wird, für deren jede die Reaktionszone (1) bekannt ist;
b) für die gemessene Verteilung der Temperatur die Reaktionszone (1) durch Interpolation bestimmt wird.

11. Anwendung des Verfahrens nach einem der vorhergehenden Ansprüche zur Bestimmung des Abnutzungsgrades eines Katalysators (2), wobei die Lage der Reaktionszone (1) bezüglich der Meßstrecke (6) als Maß für den Abnutzungsgrad verwendet wird.

## Claims

1. Procedure for determination of a reaction zone (1) in a catalytic converter (2), wherein
a) the catalytic converter is provided with an internal area (3) which is surrounded by a covering surface (5) approximately parallel to a direction of flow (4);
b) a fluid can flow through the internal area (3), in the direction of flow (4), the fluid containing components which can be converted by a catalytic, exothermic reaction in the internal area (3);
c) the reaction zone (1) is given to be part of the internal area (3) in which the reaction mainly takes place;
characterised in that the reaction zone (1) is determined by measurement of the temperature distribution over the covering surface (5) along a measuring distance (6) which is aligned approximately parallel to the direction of flow (4), wherein the reaction zone (1) is determined by a section of the measuring distance (6) in which the temperature differs from the maximum temperature over the measuring distance by less than a pre-set limit value.

2. Procedure according to claim 1, wherein the reaction zone (1) is determined while fluid is flowing through the internal area (3).

3. Procedure according to claim 2, wherein the fluid flows through the internal area (3) in a steady-state flow.

4. Procedure according to claim 1, wherein the reaction zone (1) is directly determined after the fluid has flowed through the internal area (3).

5. Procedure according to one of the previous claims, wherein measurement is carried out by evaluation of the thermal radiation (7) emitted from the covering surface (5).

6. Procedure according to claim 5, wherein a photographic record of the section (8) ensues from the thermal radiation (7) emitted from a section (8) containing the measuring distance (6) of the covering surface (5).

7. Procedure according to one of claims 1 to 4, wherein
a) the measuring distance (6) is covered by a substrate (9) which has a thermally changeable colour;
b) the reaction zone (1) is determined by evaluation of the colour of the substrate (9).

8. Procedure according to one of claims 1 to 4, wherein the measurement is carried out by at least one temperature sensor (10) located on, and moveable over, the measuring distance (6).

9. Procedure according to one of claims 1 to 4, wherein the measurement is carried out by a plurality of temperature sensors (10, 11, 12), which are arranged on the measuring distance (6).

10. Procedure according to one of the previous claims, wherein
a) the measured temperature distribution is compared with a large number of pre-set standard distributions, for each of which the reaction zone (1) is known;
b) for the measured temperature distribution, the reaction zone (1) is determined by interpolation.

11. Use of the procedure according to one of the previous claims for determining the degree of wear of a catalytic converter (2), wherein the location of the reaction zone (1) with regard to the measuring distance (6) is used as a measure of the degree of wear.

## Revendications

1. Procédé pour la détermination d'une zone réactionnelle (1) dans un catalyseur (2), dans lequel :
a) le catalyseur (2) comporte une région intérieure (3) qui est circonscrite par une surface de manchon (5) s'étendant approximativement parallèlement à une direction d'écoulement (4) ;
b) la région intérieure (3) peut être traversée dans le sens de la direction d'écoulement (4) par un fluide contenant des constituants susceptibles d'être transformés dans la région intérieure (3) par une réaction catalytique exothermique catalysée ;
c) la zone réactionnelle (1) est donnée comme étant la partie de la région intérieure (3) dans laquelle a lieu de façon prépondérante la réaction ;
caractérisé en ce que l'on détermine la zone réactionnelle (1) par mesure de la distribution de température sur la surface de manchon (5) le long d'un segment de mesure (6) qui est orienté approximativement parallèlement à la direction d'écoulement (4), la zone réactionnelle (1) étant définie par un tronçon du segment de mesure (6) sur lequel la température s'écarte de la valeur maximale de la température sur le segment de mesure (6) de moins d'une valeur limite prédéterminée.

2. Procédé selon la revendication 1, dans lequel on détermine la zone réactionnelle (1) pendant que la région intérieure (3) est traversée par le fluide.

3. Procédé selon la revendication 2, dans lequel le fluide traverse la région intérieure (3) en un écoulement stable.

4. Procédé selon la revendication 1, dans lequel on détermine la zone réactionnelle (1) indirectement après une traversée de la région intérieure (3) par le fluide.

5. Procédé selon l'une des revendications précédentes, dans lequel on obtient la mesure en utilisant le rayonnement thermique (7) provenant de la surface de manchon (5).

6. Procédé selon la revendication 5, dans lequel, avec le rayonnement thermique (7) qui provient d'un tronçon de la surface de manchon (5) contenant le segment de mesure (6), on obtient une représentation photographique du tronçon.

7. Procédé selon l'une des revendications 1 à 4, dans lequel :
a) le segment de mesure (6) est recouvert par un substrat (9) qui possède une couleur modifiable sous l'effet de la température ;
b) on détermine la zone réactionnelle (1) en utilisant la couleur du substrat (9).

8. Procédé selon l'une des revendications 1 à 4, dans lequel on obtient la mesure avec au moins un capteur de température (10) se trouvant sur le segment de mesure (6) et mobile le long de celui-ci.

9. Procédé selon l'une des revendications 1 à 4, dans lequel on obtient la mesure avec une pluralité de capteurs de température (10, 11, 12) qui sont disposés sur le segment de mesure (6).

10. Procédé selon l'une des revendications précédentes, dans lequel :
a) on compare la distribution mesurée de la température à une pluralité de distributions standard prédéterminées pour lesquelles on connaît la zone réactionnelle (1) ;
b) on détermine par interpolation la zone réactionnelle (1) pour la distribution mesurée.

11. Utilisation du procédé selon l'une des revendications précédentes à la détermination du degré d'usure d'un catalyseur (2), l'étendue de la zone réactionnelle (1) par rapport à celle du segment de mesure (6) étant utilisée comme mesure du degré d'usure.
